# EUROPÄISCHE PATENTSCHRIFT

(11) **EP 1 037 761 B1**
(45) Veröffentlichungstag und Bekanntmachung des Hinweises auf die Patenterteilung: **13.03.2002**
(21) Anmeldenummer: 98962427.5
(22) Anmeldetag: 09.12.1998
(51) Int. Cl.: B60K 31/00

(54) **REGELSYSTEM FÜR GESCHWINDIGKEIT UND ABSTAND BEI FAHRSPURWECHSEL EINES KRAFTFAHRZEUGES**
SYSTEM FOR CONTROLLING SPEED AND DISTANCE IN A MOTOR VEHICLE CHANGING TRAFFIC LANES
SYSTEME DE REGULATION DE VITESSE ET DE DISTANCE POUR UN VEHICULE CHANGEANT DE FILE

(30) Priorität: 20.12.1997 DE 19757063
(43) Veröffentlichungstag der Anmeldung: 27.09.2000
(73) Patentinhaber: Bayerische Motoren Werke Aktiengesellschaft, 80809 München (DE)
(72) Erfinder: PRESTL, Willibald, D-82223 Eichenau (DE)
(74) Vertreter: Wesel-Mair, Julia (DE)
(86) Internationale Anmeldenummer: EP9807985
(87) Internationale Veröffentlichungsnummer: WO9932318

(56) Entgegenhaltungen:
- DE-A- 19 611 379
- DE-A- 19 637 053
- DE-A- 19 637 245
- DE-C- 3 622 447
- DE-C- 4 313 568

## Beschreibung

Die Erfindung bezieht sich auf ein abstandsbezogenes Fahrgeschwindigkeitsregelsystem nach dem Oberbegriff des Patentanspruchs 1.

Ein derartiges Fahrgeschwindigkeitsregelsystem ist beispielsweise aus der US 5,014,200 oder aus der DE-C-4 313 568 bekannt. Derartige bekannte adaptive Fahrgeschwindigkeitsregelsysteme bestehen insbesondere aus zwei Komponenten: Erstens aus einem Fahrgeschwindigkeitsregler, der grundsätzlich eine vom Fahrer vorgegebene Geschwindigkeit konstant halten kann; zweitens aus einem Sensorsystem zur Erfassung des Abstands zum jeweils vorausfahrenden Fahrzeug.

Beim Gegenstand der DE-C-4 313 568 wird vorgeschlagen, durch Beobachtung der Nachbarspur, insbesondere auch durch rückwärtige Sensierung des von hinten kommenden Verkehrs, konkrete Lücken zum Einscheren zu detektieren und diese hinsichtlich ihrer Eignung für einen Spurwechsel zu bewerten.

Bei abstandsbezogenen adaptiven Fahrgeschwindig keitsregelsysternen wird grundsätzlich eine vorgegebene Geschwindigkeit konstant gehalten, bis ein vorgegebener Mindestabstand zum vorausfahrenden Fahrzeug erreicht bzw. unterschritten wird. Bei Erreichen oder Unterschreiten dieses vorgegebenen Mindestabstandes findet eine Geschwindigkeitsregelung derart statt, daß der vorgegebene Mindestabstand eingehalten wird.

Es ist Aufgabe der Erfindung, für ein Fahrgeschwindigkeitsregelsystem eingangs genannter Art eine Überholhilfe bzw. eine Fahrspurwechselhilfe zu schaffen, die auf sichere Weise jeweils aktuellen Fahrsituationen angepaßt ist.

Diese Aufgabe wird durch die kennzeichnenden Merkmale des Patentanspruchs 1 gelöst.

Die Erfindung geht davon aus, daß die Abstandssensorsysteme bei abstandsbezogenen adaptiven Fahrgeschwindigkeitsregelsystemen in der Lage sind, auch den Verkehr auf den Nachbarspuren zu erfassen. Damit läßt sich durch mittelfristige statistische Betrachtung des Nachbarverkehrs ein aktueller Mittelwert der dort gefahrenen Geschwindigkeiten ermitteln. Ein Überholvorgang bzw. ein Fahrspurwechsel oder ein Fahrspurwechselwunsch kann beispielsweise durch ein Blinksignal, durch ein Lenkraddrehbewegungssignal, durch ein Querbeschleunigungssignal oder durch ein Gierratensignal erfaßt werden. Aufbauend auf dem Wert der mittleren Geschwindigkeit der Fahrzeuge auf der Nachbarspur bzw. auf der Ziel-Fahrspur kann eine Adaption der Fahrzeug-Geschwindigkeit und/oder des Abstandes zum auf der momentanen Fahrspur vorausfahrenden Fahrzeug erfolgen. Ziel hierbei ist ein harmonischer Spurwechsel und ein vereinfachten Einscheren auf die beobachtete Nachbarspur.

Sind die Verkehrsverhältnisse bzgl. der Geschwindigkeit und der Häufigkeit der vorbeifahrenden Fahrzeuge auf der Nebenspur zu unregelmäßig, um einen geeigneten Geschwindigkeitsmittelwert bilden zu können, kann beispielsweise auf einen vorgegebenen Festwert zur Geschwindigkeitserhöhung bzw. Geschwindigkeitsreduzierung zurückgegriffen werden.

Vorteilhafte Weiterbildungen der Erfindung sind die Gegenstände der Unteransprüche.

Die Erfindung bezieht sich grundsätzlich auf einen Fahrspurwechsel zwischen Fahrbahnen mit gleicher Fahrtrichtung. Die Fahrtrichtung auf den Nebenspuren wird z. B. mittel des Abstandssensors und/oder mittels Informationen eines Navigationssystems erkannt. Wird ein Wechsel auf eine Fahrspur der Gegenrichtung erkannt, werden die erfindungsgemäß vorgeschlagenen Maßnahmen unterdrückt.

Wird insbesondere in Verbindung mit der Berücksichtigung von Ländervarianten oder z.B. von Länderinformationen aus einem Navigationssystem zwischen einem Wechsel auf die linke Fahrspur und einem Wechsel auf die rechte Fahrspur unterschieden, kann erkannt werden, ob auf eine schnellere oder auf eine langsamere Fahrspur übergegangen wird. Hierbei kann z. B. bei Rechtsverkehr grundsätzlich davon ausgegangen werden, daß bei einem Wechsel auf die linke Fahrspur eine eher schnellere Fahrzeug-Geschwindigkeit zu erwarten ist und bei einem Wechsel auf die rechte Fahrspur eine eher langsamere Fahrzeug-Geschwindigkeit. Umgekehrt würden sich die Fahrzeug-Geschwindigkeiten im Hinblick auf die linke und rechte Fahrspur verhalten, wenn die Information der Ländervariante, z. B. Südafrika oder England, auf einen Linksverkehr hindeuten würde.

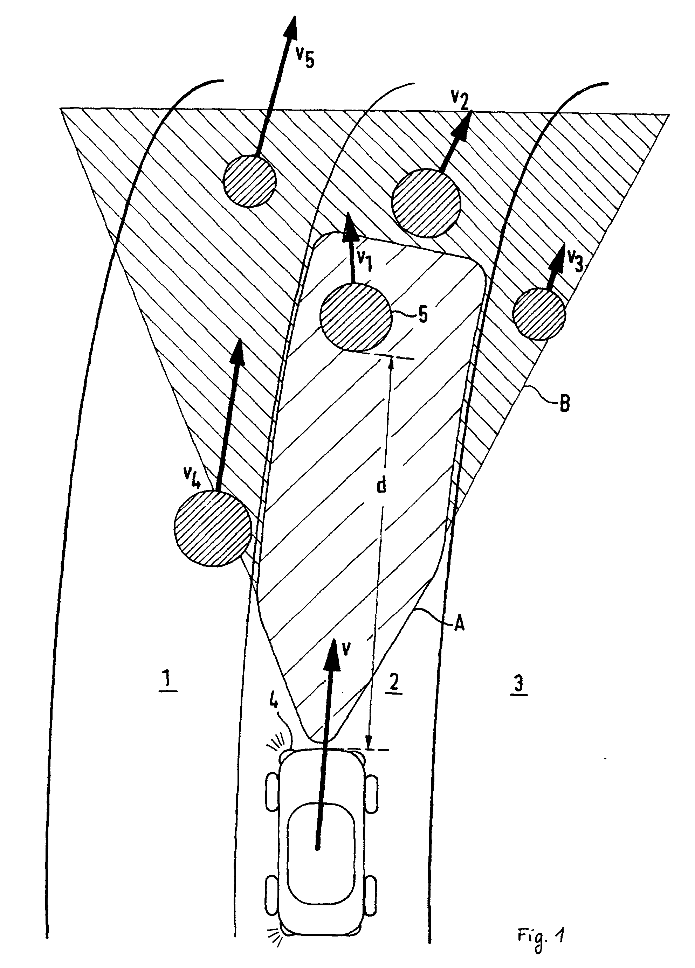

In der Zeichnung ist ein Ausführungsbeispiel der Erfindung dargestellt. Sie zeigt ein Fahrzeug mit erfindungsgemäßem Fahrgeschwindigkeitsregelsystem auf einer dreispurigen Fahrbahn.

Die dargestellte Fahrbahn weist die Fahrspuren 1, 2 und 3 auf. Das dargestellte Fahrzeug bewegt sich mit einer Fahrzeug-Geschwindigkeit v im Abstand d zum vorausfahrenden Fahrzeug 5 momentan auf der mittleren Fahrspur 2. Das hier nicht dargestellte, am Fahrzeug angebrachte Abstandssensorsystem, beispielsweise ein Radarsystem, weist einen hier dreieckförmig dargestellten Erfassungsbereich B der Fahrumgebung auf. Aus diesem Erfassungsbereich B wird üblicherweise zur Bestimmung des Abstands d zu einem vorausfahrenden Fahrzeug 5 lediglich ein keulenförmiger Korridor A mit einer angenommenen Fahrspurbreite ausgewertet.

Erfindungsgemäß wird nunmehr der gesamte Erfassungsbereich B dahingehend weiter ausgenutzt, daß eine mittlere Geschwindigkeit der zumindest auf einer Nachbarspur 1 und/oder 3 fahrenden Fahrzeuge erfaßt wird. Die anderen Fahrzeuge sind in der Zeichnung in Form von dunklen Kreisen mit den Geschwindigkeiten v₁ bis v₅ schematisch angedeutet.

Das erfindungsgemäße Fahrgeschwindigkeitsregelsystem schätzt mittels der Abstandssensorsignale eine mittlere Geschwindigkeit der in einem vorgegebenen Zeitraum auf einer benachbarten Fahrspur 1 oder 3 vorbeifahrenden Fahrzeuge, wie im dargesteliten Ausführungsbeispiel die mittlere Geschwindigkeit (v₄ + v₅)/2 = vₗᵢ der beiden Fahrzeuge auf der linken Fahrspur 1. Durch einen Relativgeschwindigkeitsvergleich zwischen der Fahrzeug-Geschwindigkeit v und den jeweiligen Geschwindigkeiten v₄ bzw. v₅ auf der Fahrspur 1 wird auch die Richtung der Fahrzeuge auf der Fahrspur 1 erfaßt. Über ein Blinksignal 4, im dargestellten Beispiel ein Linksblinken, erkennt das erfindungsgemäße Fahrgeschwindigkeitsregelsystem, daß die linke Fahrspur 1 die Ziel-Fahrspur bei einem Fahrspurwechsel ist. Da im dargestellten Ausführungsbeispiel die mittlere Geschwindigkeit vₗᵢ auf der linken Fahrspur 1 höher als die Fahrgeschwindigkeit v ist, kann beispielsweise bereits bei Erkennen des Fahrspurwechselwunsches die Fahr-Geschwindigkeit v angehoben und der Abstand d reduziert werden.

Ebenso kann bei einem Wechsel auf die rechte Fahrspur 3 eine Verlangsamung der Fahrzeug-Geschwindigkeit v vorgenommen werden.

Diese erfindungsgemäße situativ angepaßte Überholhilfe führt zu harmonischen Übergängen bei Fahrgeschwindigkeitsregelsystemen ohne notwendigen Fahrereingriff. Hierdurch wird der Kundennutzen durch Komfortgewinn gesteigert.

## Patentansprüche

1. Abstandsbezogenes Fahrgeschwindigkeitsregelsystem für Kraftfahrzeuge mit einem elektronischen Steuergerät, wobei das elektronische Steuergerät mindestens ein Signal (4) zur Erkennung eines Fahrspurwechsels oder eines Fahrspurwechselwunsches von der momentanen Fahrspur (2) auf eine Ziel-Fahrspur (1) und mindestens ein Signal zur Schätzung der Geschwindigkeit der Fahrzeuge auf der Ziel-Fahrspur (1) erfaßt, **dadurch gekennzeichnet daß** das Steuergerät im Falle eines Fahrspurwechseis oder Fahrspurwechselwunsches die Fahrzeug-Geschwindigkeit (v) und/oder den Abstand (d) zum auf der momentanen Fahrspur vorausfahrenden Fahrzeug (5) adaptiv entsprechend der mittleren Geschwindigkeit der Fahrzeuge auf der Ziel-Fahrspur (1) vorgibt.

2. Abstandsbezogenes Fahrgeschwindigkeitsregelsystem nach Anspruch 1, **dadurch gekennzeichnet, daß** die Richtung der Fahrzeuge auf der Ziel-Fahrspur (1) erfaßt und berücksichtigt wird.

3. Abstandsbezogenes Fahrgeschwindigkeitsregelsystem nach Anspruch 1 oder 2, **dadurch gekennzeichnet, daß** zwischen einem Wechsel auf die linke Fahrspur (1) und einem Wechsel auf die rechte Fahrspur (3) unterschieden wird.

4. Abstandsbezogenes Fahrgeschwindigkeitsregelsystem nach Anspruch 3, **dadurch gekennzeichnet, daß** zwischen verschiedenen Ländervarianten bzw. Länderinformationen unterschieden wird.

## Claims

1. A distance related vehicle speed control system for motor vehicles with an electronic control unit, in which the electronic control unit captures at least one signal (4) for the recognition of a traffic lane change or of a wish to change lanes from the current traffic lane (2) to a target traffic lane (1) and at least one signal for estimating the speed of the vehicles in the target lane (1), **characterised in that,** in the event of a change of traffic lane or the wish to change lanes the control unit adaptively prescribes the vehicle speed (v) and/or the distance to the vehicle in front in the current traffic lane (5) corresponding to the average speed of the vehicles in the target traffic lane (1).

2. A distance related vehicle speed control system according to Claim 1, **characterised in that** the direction of the vehicles in the target traffic lane (1) is captured and taken into consideration.

3. A distance related vehicle speed control system according to Claim 1 or Claim 2, **characterised in that** a distinction is made between a change into the left-hand traffic lane (1) and a change into the righthand traffic lane (3).

4. A distance related vehicle speed control system according to Claim 3, **characterised in that** a distinction is made between different country variations or country information.

## Revendications

1. Système de régulation de vitesse en fonction de la distance pour des véhicules équipés d'un appareil de commande électronique dans lequel : l'appareil de commande électronique détecte au moins un signal (4) pour reconnaître un changement de voie ou un souhait de changement de voie pour passer de la vole instantanée (2) à une voie de destination (1) et au moins un signal pour évaluer la vitesse des véhicules circulant sur la voie de destination (1),
**caractérisé en ce que**
l'appareil de commande en cas de changement de voie ou de souhait de changement de vote prédétermine la vitesse (v) du véhicule et/ou la distance (d) par rapport au véhicule (5) en amont sur la voie actuelle, en prédéterminant de manière adaptative la vitesse moyenne des véhicules sur la voie de destination (1).

2. Système de régulation de vitesse en fonction de la distance, selon la revendication 1,
**caractérisé en ce qu'**
on détecte et on tient compte de la direction de circulation des véhicules sur la voie de destination (1).

3. Système de régulation de vitesse en fonction de la distance, selon l'une quelconque des revendications 1 ou 2,
**caractérisé en ce qu'**
on distingue entre un changement vers la voie gauche (1) et un changement vers la voie droite (3).

4. Système de régulation de vitesse en fonction de la distance, selon la revendication 2,
**caractérisé en ce qu'**
on distingue entre les différentes variantes de pays ou informations de pays.
